# EUROPEAN PATENT SPECIFICATION

(11) **EP 3 599 076 B1**
(45) Date of publication and mention of the grant of the patent: **09.06.2021**
(21) Application number: 18185464.7
(22) Date of filing: 25.07.2018
(51) Int. Cl.: B29C 64/112, B29C 64/393, B33Y 50/02

(54) **METHOD OF PRINTING WITH GLOSS CONTROL**
VERFAHREN ZUM DRUCKEN MIT GLANZSTEUERUNG
PROCÉDÉ D'IMPRESSION À COMMANDE DE BRILLANCE

(43) Date of publication of application: 29.01.2020
(73) Proprietor: Canon Production Printing Holding B.V., 5914 HH Venlo (NL)
(72) Inventor: PAGE, Marine, 5914 CA Venlo (NL)
(74) Representative: Canon Production Printing IP Department

(56) References cited:
- EP-A1- 3 093 146
- EP-A1- 3 222 411

## Description

### BACKGROUND OF THE INVENTION

### 1. Field of the invention

The invention relates to a method of printing a color surface of an object by printing dots of curable ink in several superposed layers.

### 2. Description of the Related Art

Elevated printing and 3D-printing have become an attractive method of producing relief-like objects and three-dimensional objects with almost arbitrary shapes. A problem is, however, that such printed objects tend to have an unnatural appearance because the surface of the object that is constituted by cured ink appears to be too glossy. Although the gloss of a color surface may be controlled to appear more shiny, or glossy by adding an amount of clear ink, or varnish, on top of the colorants that make up the color, it is hard to obtain the opposite, which is a more satiny, matte appearance.

If the 3D-data for printing the object have been acquired by scanning an original or a model, it is possible, at least in principle, to scan the original with such a high resolution that the natural micro-texture of the surface of the original is also reproduced on the printed object. The gloss of the printed object, at least as determined by this micro-texture, should then be similar to that of the original. However, scanning objects with such a high resolution is cumbersome and implies the need to process a huge amount of data. The printing resolution is also insufficient to reproduce such fine spatial frequencies. Furthermore, the gloss of the printed object also depends on the applied material. This line of approach is therefore not practical.

It is an object of the present invention to provide an efficient method of controlling the gloss of a color surface of a printed object, especially in the satiny, matte range, which is the opposite of the shiny, glossy range Document EP 3 222 411 A1 discloses a method in accordance with the preamble of claim 1.

### SUMMARY OF THE INVENTION

In order to achieve this objective, a method in accordance with claim 1 is provided. The method comprises the steps of:
a) defining a micro-texture, the micro-texture being a repetitive pattern of elevated parts and depressed parts;
b) establishing a gloss function that indicates a gloss value of a surface having said micro-texture, as a function of a height difference between a maximum height of the elevated parts and a minimum height of the depressed parts of the micro-texture;
c) assigning a target gloss value to at least a part of a surface area of the object;
d) determining, on the basis of the gloss function, a required local height difference corresponding to the target gloss value; and
e) forming, on said part of the surface area of the object, the micro-texture with a height profile scaled to the required local height difference.

Thus, according to the invention, a gloss-reducing micro-texture is additionally and artificially formed on the surface of the printed object. Since the micro-texture is a repetitive pattern, a small amount of data is sufficient for defining the micro-texture, so that the required amount of data processing is limited. Moreover, the micro-texture needs to define only a two-dimensional spatial distribution of elevated parts and depressed parts, whereas the height difference between these parts in the third dimension is scalable depending upon the desired gloss value. Once a gloss function that indicates the gloss value of the surface as a function of the height difference has been established for a specific micro-texture, any desired gloss value can easily be translated into a height difference that can then be used, in the print process, for controlling the number of superposed ink dots that form the elevated parts of the micro-texture. In particular, it has been found that a surface having a minimum gloss of 20 gloss units (GU) on a scale from 0 to 100 GU without the present invention, may be printed with a gloss of less than 2 GU on this same scale by the application of the invented method.

More specific optional features of the invention are indicated in the dependend claims. It is preferred that an elementary cell of the repetitive pattern that forms the micro-texture has dimensions close to or below the limit of spatial resolution of the naked human eye under normal viewing conditions, so that the micro-texture itself is hardly visible on the printed object and only its impact on the surface gloss is perceptible.

According to the invention, the elevated parts of the micro-texture are constituted by pillars of ink which have a uniform height and have a uniform cross-section over their entire height, whereas the depressed parts are simply formed by the gaps between these pillars. In that case, the height difference between the elevated parts and the depressed parts will simply be given by the height of the pillars. Preferably, these pillars are made with the smallest ink drops that are available in the printer in order to follow the defined texture as well as possible.

For example, the size of the elementary cell may be in the order of magnitude of 350 µm or less. If an ink jet printer with a print resolution of 450 dpi is used for printing the three-dimensional object, then a suitable choice for the micro-texture could be a matrix-like pattern of isolated pillars with a dimension of 56 µm x 56 µm (corresponding to one pixel) and the width of the gaps between the pillars may be of the same size, so that an elementary cell would have dimensions of 112 x 112 µm².

The micro-texture may be formed of white ink, or, optionally, of transparent ink, so that it does not significantly affect the color impression of the printed object. As an alternative, the micro-texture, in particular the elevated parts thereof, may be printed with colored ink so that the color of the elevated parts will determine the color of the surface area. A regular halftone colored layer can then be printed on top of the white micro-texture. In particular, it has been found that the gloss is affected by the composition of the colorants in this colored halftone layer. A compound color, being constituted by at least two colorants, is found to have a lower gloss than a simple color, wherein only one colorant is used, if the same height difference in a particular micro-texture is applied. This effect is advantageously used to set up a multidimensional gloss function with the height difference and color composition as variables, which, after proper calibration, is practiced to make the gloss of a full color surface more uniform by modulating the height of the micro-texture.

In yet another embodiment, the elevated parts or pillars may be printed with ink in any suitable color, e.g. a color that is particularly suited for building-up relatively high pillars with a small cross-section.

### BRIEF DESCRIPTION OF THE DRAWINGS

Embodiment examples of the invention will now be described in conjunction with the drawings, wherein:
- Fig. 1: is a schematic view illustrating a print process according to the invention;
- Fig. 2: shows a number of examples of different micro-textures;
- Fig. 3: shows a graph of a gloss function of a particular micro-texture; and
- Fig. 4: is a flow diagram illustrating a number of steps of a method according to the invention.

### DETAILED DESCRIPTION OF EMBODIMENTS

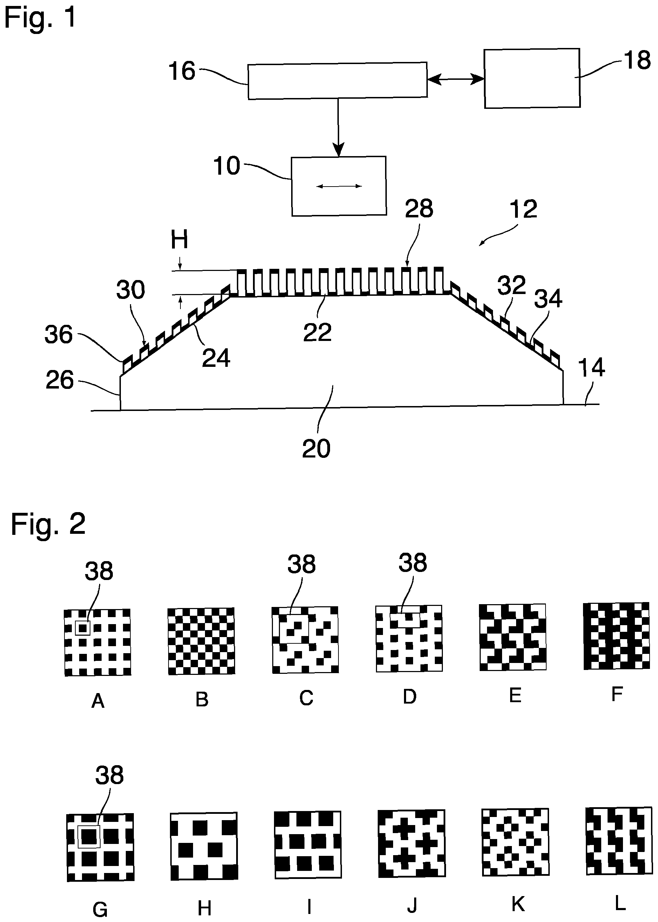

As is shown in Fig. 1 a printer having a scanning-type print head 10 is used for printing a three-dimensional object 12 on a flat print substrate 14.

The print head 10 is controlled by a print controller 16. The print controller 16 communicates with a user interface 18 where a user can specify among others the desired shape of the three-dimensional object 12, the surface color or colors of that object, as well as the desired surface gloss of the object.

The printed object 12 has a core 20 that is formed by several superposed layers of cured ink and defines the three-dimensional shape of the object. In the example shown, the object has a flat top surface area 22 surrounded by sloped surface areas 24 and relatively small side faces 26 that extend normal to the plane of the substrate 14.

In order to reduce the surface gloss of the object 12, micro-textures 28, 30 have been formed on the flat top surface area 22 and on each of the sloped surface areas 24. The micro-textures 28, 30, which have been shown in cross-section in Fig. 1, are constituted by repetitive two-dimensional patterns (one of these dimensions extending normal to the plane of the drawings in Fig. 1) of elevated parts 32 and depressed parts 34. A height difference H between the maximum height of the elevated parts 32 and the minimum height of the depressed parts 34 determines the gloss of the respective surface area (the height difference H has been shown only for the surface area 22 in Fig. 1), such that the gloss may be determined as a function of the height difference H for a selected pillar configuration, or micro-texture. The height difference H may be selected differently for the different surface areas 22, 24, depending upon the desired gloss of these areas, and may even be selected differently for different parts of the same surface area.

In the example shown, an ink in an arbitrary color has been used for forming the core 20 of the object 12, whereas the elevated parts of the micro-textures 28, 30 and 32 are formed by white ink. The color appearance of the object is determined by a continuous color layer 36 of colored ink.

In another embodiment, a continuous color layer may be formed on the surface of the core 20, and the micro-textures 28, 30 may be formed of transparent ink.

Fig. 2 shows examples A - L of repetitive two-dimensional patterns that may constitute the micro-textures 28, 30. In each example, the elevated parts are represented by black areas and the depressed parts between them are represented by white areas. All these examples have in common that the elevated parts are constituted by pillars which have a uniform cross-section on their entire height, and the depressed parts are simply formed by gaps separating these pillars.

In example A, the elevated parts, represented by black squares, have a size of 56 x 56 µm, which is the size of a single pixel in case of a print resolution of 450 dpi. The depressed parts are formed by continuous gaps that separate the pillars and each have also a width of 56 µm. Thus, an elementary cell 38 of the repetitive pattern has a size of 112 x 112 µm.

In the example B, the pillars and the elementary cell have the same size, but the elevated parts and the depressed parts form a checkerboard pattern.

In example C, the elementary cell 38 has a size of 4 x 4 pixel and the number of pillars per surface area has been reduced.

In example D, the elementary cell 38 has a size of 4 x 2 pixel.

Examples E - L show patterns in which the pillars (elevated parts 32) have more complex shapes and/or larger dimensions. For example, the pillars in the examples G, H, and I have a size of 2 x 2 pixel. As has been illustrated by examples F and L, the pattern may also be anisotropic, so that the gloss may be different in two mutually orthogonal directions.

Experiments have hinted to the preliminary result that the pattern shown in examples G and I, with square pillars of 2 x 2 pixels in an elementary cell 38 of 3 x 3 pixels for G and square pillars of 2 x 2 pixels in an elementary cell of 3 x 6 pixels for I, are particularly useful.

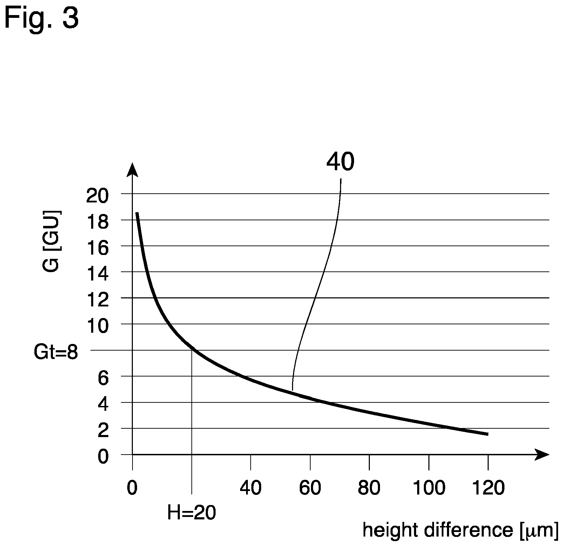

In experiments, the gloss of surface areas with the micro-textures shown in Fig. 2 was measured, using a standardized gloss meter such as KSJ MG268-F2. The measurements have been repeated for each pattern with different values of the height difference H, so that a gloss function 40 of the type shown in Fig. 3 could be established for each pattern. This gloss function 40 gives the gloss at an angle of 60 degrees (measured in a suitable gloss unit GU) as a function of the height difference H. Thus, if a certain target gloss value Gt is desired for a surface area of the printed object, the gloss function permits to determine the height difference H that is necessary for achieving that target gloss value. In this way, the gloss value of any (non-vertical) surface part of the printed object 12 can be controlled precisely and with high reproducibility. Further experiments relate the gloss of a surface with a fixed height difference of a specific micro-structure to the composition of the colorants, wherein compound colors, which are colors from a combination of at least two colorants, are found to have a lower gloss than single colors. A quadratic curve (not shown) describes this alteration of gloss with colorant composition in the case of cyan, magenta and yellow colorant.

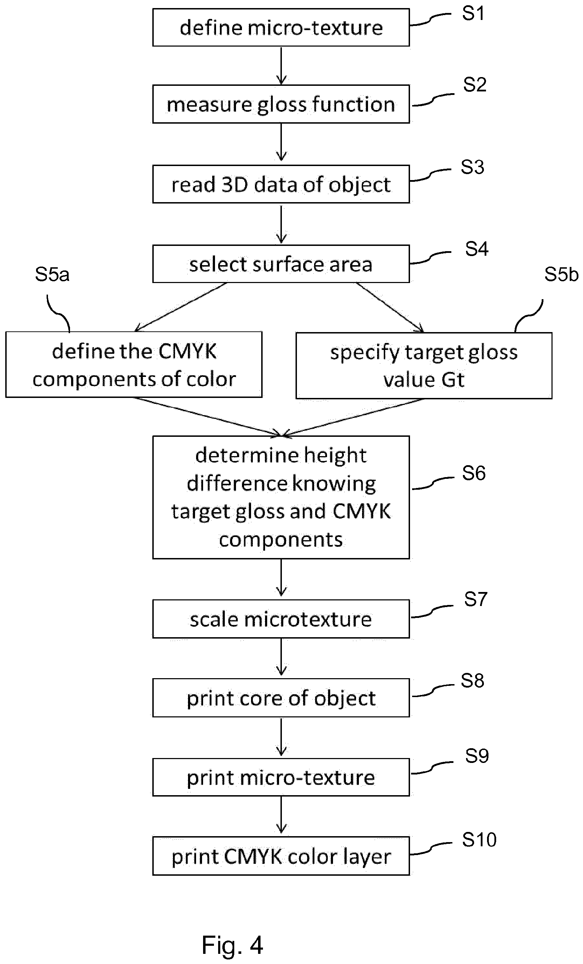

A number of steps of an embodiment example of the method according to the invention have been indicated in a flow diagram in Fig. 4.

Steps S1 and S2 are preparatory steps in which a pattern of the micro-texture to be used is defined (e.g. the pattern of example I in Fig. 2) and in which the gloss function 40 is measured for that micro-texture. Of course, once the gloss function of a certain micro-texture has been measured, the results may be stored in a library so that the gloss function can simply be read from the library when the same micro-texture is to be used again.

In step S3, the process of printing the three-dimensional object 12 starts with reading (or calculating) the 3D data of that object, comprising shape, color and gloss. Then, in step S4, a surface area, e.g. 22, is selected for which a specific target gloss value Gt shall be achieved. The color is processed in a color management module to obtain the CMYK-components for printing the color in step S5a. In parallel, the target gloss value is assigned to the surface area in step S5b. By knowing both the target gloss and the CMYK components, it is possible to determine the necessary height difference. Step S6 is a step of determining the corresponding height difference H by means of the gloss function 40, as shown in Fig. 3 for a specific colorant composition. Then, once the required height difference H has been determined, the final three-dimensional shape of the micro-texture is determined in step S7 by scaling the height dimension of the micro-texture, i.e. by setting the height of the pillars to the required height difference H.

The core 20 of the object 12 is printed in step S8 and the micro-texture 28 and/or 30 is printed in step S9, and the color layer 36 is printed in step S10, which completes the print process.

## Claims

1. A method of printing a color surface of an object (12) by printing dots of curable ink in several superposed layers, the method comprising the steps of:
a) defining a micro-texture (28, 30), the micro-texture being a repetitive pattern of elevated parts;
b) establishing a gloss function (40) that indicates a gloss value (G) of a surface having said micro-texture, as a function of a height difference (H) between a maximum height of the elevated parts (32) and a minimum height of the depressed parts (34) of the micro-texture;
c) assigning a target gloss value (Gt) to at least a part of a surface area (22, 24) of the object (12);
d) determining, on the basis of the gloss function (40), a required local height difference (H) corresponding to the target gloss value (Gt); and
e) forming, on said part of the surface area (22, 24) of the object (12), the micro-texture (28, 30) with a height profile scaled to the required local height difference (H), **characterized in that** the elevated parts (32) take the form of pillars that have a uniform height and a uniform cross-sectional shape over their entire height, and the depressed parts (34) take the form of gaps between the pillars.

2. The method according to claim 1, wherein the elevated parts (32) have a size in a range from p to 350 µm, when p is a size of a single pixel that is printable in a print process in which the object (12) is formed.

3. The method according to claims 1 or 2, wherein the elevated parts (32) take the form of square pillars with a size of 2 x 2 pixels.

4. The method according to any of the preceding claims, wherein the gloss function (40) is established based on a gloss measurement of the micro-texture with various height differences.

5. The method according to any of the preceding claims, wherein a continuous color layer (36) is formed on top of the micro-texture (28, 30).

6. The method according to claim 5, wherein a composition of colorants constituting a color appearance of the color layer (36) is incorporated in the gloss function (40).

7. The method according to claim 6, wherein a quadratic relation between a gloss value (G) and colorant composition for a fixed height difference H is applied in a multidimensional gloss function (40).

8. The method according to claim 5, wherein the height difference (H) is modulated across the color surface to enhance a uniformity of a gloss appearance of a full color surface.

9. A software product comprising program code on a machine-readable non-transitory medium, the program code, when loaded into a controller of a printer, causing the controller to perform the method according to any of the preceding claims.

## Patentansprüche

1. Verfahren zum Drucken einer Oberfläche eines Objekts (12) durch Aufdrucken von Punkten aus aushärtbarer Tinte in mehreren einander überlagernden Schichten, welches Verfahren die folgenden Schritte aufweist:
a) definieren einer Mikrotextur (28, 30), wobei die Mikrotextur ein sich wiederholendes Muster aus erhöhten Teilen ist,
b) erstellen einer Glanzfunktion (40), die einen Glanzwert (G) einer Oberfläche, die die Mikrotextur aufweist, als Funktion einer Höhendifferenz (H) zwischen einer maximalen Höhe der erhöhten Teile (32) und einer minimalen Höhe der vertieften Teile (34) der Mikrotextur angibt;
c) zuweisen eines Soll-Glanzwertes (Gt) zu wenigstens einem Teil eines Oberflächenbereiches (22, 24) des Objekts (12);
d) bestimmen, auf der Basis der Glanzfunktion (40), einer erforderlichen lokalen Höhendifferenz (H), die dem Glanzwert (Dt) entspricht; und
e) bilden, auf dem genannten Teil des Oberflächenbereichs (22, 24) des Objekts (12), der Mikrotextur (28, 30) mit einem Höhenprofil, das auf die erforderliche lokale Höhendifferenz (H) skaliert ist,
**dadurch gekennzeichnet, dass** die erhöhten Teile (32) die Form von Säulen haben, die eine einheitliche Höhe und auf ihrer gesamten Höhe eine einheitliche Querschnittsform aufweisen, und dass die vertieften Teile (34) die Form von Lücken zwischen den Säulen haben.

2. Verfahren nach Anspruch 1, bei dem die erhöhten Teile (32) eine Größe in einem Bereich von p bis 350 µm haben, wobei p die Größe eines einzelnen Pixels ist, das in einem Druckprozess druckbar ist, in dem das Objekt (12) gebildet wird.

3. Verfahren nach Anspruch 1 oder 2, bei dem die erhöhten Teile (32) die Form von quadratischen Säulen mit einer Größe von 2x2 Pixeln haben.

4. Verfahren nach einem der vorstehenden Ansprüche, bei dem die Glanzfunktion (40) auf der Basis einer Glanzmessung der Mikrotextur mit verschiedenen Höhendifferenzen erstellt wird.

5. Verfahren nach einem der vorstehenden Ansprüche, bei dem eine durchgehende Farbschicht (36) auf der Oberseite der Mikrotextur (28, 30) gebildet wird.

6. Verfahren nach Anspruch 5, bei dem eine Zusammensetzung von Färbemitteln, die einen Farbeindruck der farbigen Schicht (36) ergibt, in die Glanzfunktion (40) einbezogen ist.

7. Verfahren nach Anspruch 6, bei dem in einer multidimensionalen Glanzfunktion (40) eine quadratische Beziehung zwischen einem Glanzwert (G) und der Zusammensetzung der Färbemittel für eine feste Höhendifferenz H angewandt wird.

8. Verfahren nach Anspruch 5, bei dem die Höhendifferenz (H) über die farbige Oberfläche moduliert wird, um eine Einheitlichkeit eines Glanzeindrucks einer vollfarbigen Oberfläche zu verstärken.

9. Softwareprodukt mit Programmcode auf einem maschinenlesbaren nichtflüchtigen Medium, welcher Programmcode, wenn er in eine Steuereinrichtung eines Druckers geladen wird, die Steuereinrichtung veranlasst, das Verfahren nach einem der vorstehenden Ansprüche auszuführen.

## Revendications

1. Procédé d'impression d'une surface de couleur d'un objet (12) par impression de points d'encre durcissable dans plusieurs couches superposées, le procédé comprenant les étapes de :
a) la définition d'une micro-texture (28, 30), la micro-texture étant un motif répétitif de parties en relief ;
b) l'établissement d'une fonction de brillance (40) qui indique une valeur de brillance (G) d'une surface présentant ladite micro-texture, en fonction d'une différence de hauteur (H) entre une hauteur maximale des parties en relief (32) et une hauteur minimale des parties creuses (34) de la micro-texture ;
c) l'assignation d'une valeur de brillance cible (Gt) à au moins une partie d'une zone de surface (22, 24) de l'objet (12) ;
d) la détermination, sur la base de la fonction de brillance (40), d'une différence de hauteur (H) locale requise correspondant à la valeur de brillance cible (Gt) ; et
e) la formation, sur ladite partie de la zone de surface (22, 24) de l'objet (12), de la micro-texture (28, 30) avec un profil de hauteur mis à l'échelle à la différence de hauteur (H) locale requise,
**caractérisé en ce que** les parties en relief (32) prennent la forme de piliers présentant une hauteur uniforme et une forme de coupe transversale uniforme sur toute leur hauteur, et les parties creuses (34) prennent la forme d'écartements entre les piliers.

2. Procédé selon la revendication 1, dans lequel les parties en relief (32) présentent une taille dans une plage de p à 350 µm, où p est une taille d'un pixel unique imprimable dans un processus d'impression dans lequel l'objet (12) est formé.

3. Procédé selon la revendication 1 ou 2, dans lequel les parties en relief (32) prennent la forme de piliers carrés avec une taille de 2 x 2 pixels.

4. Procédé selon l'une quelconque des revendications précédentes, dans lequel la fonction de brillance (40) est établie sur la base d'une mesure de brillance de la micro-texture avec diverses différences de hauteur.

5. Procédé selon l'une quelconque des revendications précédentes, dans lequel une couche de couleur (36) continue est formée au-dessus de la micro-texture (28, 30).

6. Procédé selon la revendication 5, dans lequel une composition de colorants constituant une apparence de couleur de la couche de couleur (36) est incorporée dans la fonction de brillance (40).

7. Procédé selon la revendication 6, dans lequel une relation quadratique entre une valeur de brillance (G) et une composition de colorant pour une différence de hauteur H fixe est appliquée dans une fonction de brillance (40) multidimensionnelle.

8. Procédé selon la revendication 5, dans lequel la différence de hauteur (H) est modulée à travers la surface de couleur pour améliorer une uniformité d'une apparence de brillance d'une surface de couleur complète.

9. Produit logiciel comprenant un code de programme sur un support non transitoire lisible par machine, le code de programme, lorsqu'il est chargé dans un dispositif de commande d'une imprimante, amenant le dispositif de commande à réaliser le procédé selon l'une quelconque des revendications précédentes.
